# EUROPEAN PATENT APPLICATION

(11) **EP 3 604 624 A1**
(43) Date of publication of application: **05.02.2020**
(21) Application number: 18776537.5
(22) Date of filing: 27.03.2018
(51) Int. Cl.: C25D 5/44, C25D 5/30

(54) **PLATED WIRE ROD MATERIAL, METHOD FOR PRODUCING SAME, AND CABLE, ELECTRIC WIRE, COIL AND SPRING MEMBER, EACH OF WHICH IS FORMED USING SAME**

(30) Priority: 31.03.2017 JP 2017070064
(71) Applicant: Furukawa Electric Co., Ltd., Chiyoda-ku Tokyo 100-8322 (JP)
(72) Inventor: YAMAUCHI Miho, Tokyo 100-8322 (JP); OGIWARA Yoshiaki, Tokyo 100-8322 (JP)
(74) Representative: Weickmann & Weickmann PartmbB
(86) International application number: PCT/JP2018/012591
(87) International publication number: WO 2018/181399

(57) **Abstract**

A plated wire rod material (10) according to the present invention comprises a substrate (1) composed of aluminum or an aluminum alloy, and a surface treatment coat (2) including one or more metal layers and covering the substrate (1). Of the one or more metal layers, an undermost metal layer (21) which is a metal layer formed on the substrate (1) includes nickel, a nickel alloy, cobalt or a cobalt alloy. A mixed layer (3) containing a metal component in the substrate (1), a metal component in the surface treatment coat and an oxygen component is present at an interface between the substrate (1) and the surface treatment coat (2).

## Description

### Technical Field

The present invention relates to a plated wire rod material including a substrate composed of aluminum or an aluminum alloy, and a surface treatment coat covering the substrate, a method for producing the plated wire rod material, and a cable, an electric wire, a coil and a spring member, each of which is formed using the plated wire rod material.

### Background Art

In response to environmental regulations in recent years, weight saving has come to be strongly demanded in the field of automobiles and the like. Weight saving in electric wires and cables which are important components in power supply and signal transfer in this field contributes to improvement of fuel efficiency of automobiles, and power saving and safety in production of automobiles, and is therefore particularly desired.

Copper has been heretofore used as a material for electric wires because copper has high electrical conductivity and excellent corrosion resistance. However, copper has a large specific gravity, and therefore makes it difficult to attain considerable weight saving. Meanwhile, aluminum has electrical conductivity lower than that of copper, but the specific gravity of aluminum is one third of the specific gravity of copper, and therefore aluminum is more suitable as a material for electric wires than copper. However, since aluminum easily forms an oxide coat when contacting air, aluminum has lower electrical connection reliability as compared to copper, and is difficult to solder.

For solving these problems, a copper-clad aluminum electric wire has been proposed (Patent Literature 1). The copper-clad aluminum electric wire is one obtained by providing Al-Mg-based aluminum as a core material, and covering the periphery of the core material with copper having a purity of not less than 99.9% with an area coverage of not less than 20% and not more than 40%, and the solderability and the corrosion resistance of the copper-clad aluminum electric wire are improved because aluminum is covered with copper. Further, an aluminum wire has been proposed in which the outer periphery of a zinc thin coat formed on the surface of an aluminum core by zinc substitution is covered with a nickel-plating coat by electrolytic nickel plating (Patent Literature 2). The aluminum wire is easily subjected to cold drawing processing by wire drawing because a difference in hardness between the aluminum core and the nickel-plating coat is adjusted to not more than 100 Hv. Further, the aluminum wire has good solderability because the surface of the aluminum core is covered with the nickel-plating coat. Further, unlike the copper-clad aluminum electric wire, the aluminum wire does not have intermetallic compound formed between copper and aluminum, and therefore enables variations in mechanical properties in a high-temperature atmosphere to be suppressed.

However, the copper-clad aluminum wire rod disclosed in Patent Literature 1 has a smaller weight saving effect as compared to a wire rod composed only of aluminum because the copper covering layer has a large thickness. Further, when the copper-clad aluminum wire rod is heated at a high temperature for a long time, an intermetallic compound formed at an interface between copper and aluminum grows, resulting in deterioration of mechanical properties such as tensile strength. The aluminum wire disclosed in Patent Literature 2 is poor in corrosion resistance to salt water or the like, leading to impairment of long-term reliability, and the nickel-plating coat may be peeled off by heating or the like, because the zinc thin coat is present between the aluminum core and the nickel-plating coat. Further, since aluminum which is a material difficult to plate is plated with nickel, production processes are complicated.

### Document List

### Patent Literatures

Patent Literature 1: Japanese Patent Application Publication No. H04-230905
Patent Literature 2: Japanese Patent Application Publication No. 2003-301292

### Summary of Invention

### Technical Problem

It is an object of the present invention to provide a plated wire rod material improved in terms of corrosion resistance to salt water by solving the above-described problems.

### Solution to Problem

The present inventors have extensively conducted studies, and resultantly found that by examining a mixed layer present between a substrate and a surface treatment coat covering the substrate in a plated wire rod material having aluminum or an aluminum alloy as the substrate, a plated wire rod material improved in terms of corrosion resistance to salt water can be provided, and the surface treatment coat can be formed on a wire rod.

Specifically, the subject matters of the present invention are as follows.
(1) A plated wire rod material comprising: a substrate composed of aluminum or an aluminum alloy; and a surface treatment coat including one or more metal layers and covering the substrate, wherein, of the one or more metal layers, an undermost metal layer which is a metal layer formed on the substrate includes nickel, a nickel alloy, cobalt or a cobalt alloy, and a mixed layer containing a metal component in the substrate, a metal component in the surface treatment coat and an oxygen component is present at an interface between the substrate and the surface treatment coat.
(2) The plated wire rod material according to (1), wherein an average thickness of the mixed layer is in a range of not less than 1.00 nm and not more than 40 nm as measured at a vertical cross-section of the plated wire rod material.
(3) The plated wire rod material according to (1) or (2), wherein in a detected intensity profile of each of the components of the plated wire rod material which are obtained by performing line analysis from the substrate side to the surface treatment coat side using SETM-EDX in observation of a cross-section of the plated wire rod material, a vertical length in the plating coat lamination direction of a range over which the detected intensity of a main component of the surface treatment coat is not less than 0.5 times and not more than 2.0 times the detected intensity of the main component of the substrate and the detected intensity of oxygen is not less than 10% of a sum of the detected intensities of the main component of the substrate and the main component of the surface treatment coat is in a range of not less than 1.00 nm and not more than 40 nm.
(4) The plated wire rod material according to any one of (1) to (3), wherein the thickness of the undermost metal layer is 0.05 µm or more and less than 2.0 µm.
(5) The plated wire rod material according to any one of (1) to (4), wherein the surface treatment coat has the undermost metal layer, and one or more metal layers formed on the undermost metal layer, and the one or more metal layers are formed of any one selected from the group consisting of nickel, a nickel alloy, cobalt, a cobalt alloy, iron, an iron alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy.
(6) The plated wire rod material according to (5), wherein the one or more metal layers include two or more metal layers.
(7) A method for producing the plated wire rod material according to any one of (1) to (6), comprising a surface activation treatment step of treating a surface of the substrate at a dissolved oxygen concentration in an activation treatment liquid of 3 to 100 ppm, a treatment temperature of 10 to 60°C and a current density of 0.05 to 20 A/dm² for a treatment time of 0.5 to 150 seconds using an activation treatment liquid containing:
   (i) 10 to 500 mL/L in total of one or more acid solutions selected from solutions of sulfuric acid, nitric acid, hydrochloric acid, hydrofluoric acid, phosphoric acid, hydrobromic acid, hydroiodic acid, acetic acid and oxalic acid; and
   (ii) a nickel compound selected from the group consisting of nickel sulfate, nickel nitrate, nickel chloride, nickel bromide, nickel iodide and nickel sulfamate (0.1 to 500 g/L in terms of a nickel metal content), or a cobalt compound selected from the group consisting of cobalt sulfate, cobalt nitrate, cobalt chloride, cobalt bromide, cobalt iodide and cobalt sulfamate (0.1 to 500 g/L in terms of a cobalt metal content).
(8) A cable formed using the plated wire rod material according to any one of (1) to (6).
(9) An electric wire formed using the plated wire rod material according to any one of (1) to (6).
(10) A coil formed using the plated wire rod material according to any one of (1) to (6).
(11) A spring member formed using the plated wire rod material according to any one of (1) to (6).

### Effects of Invention

According to the present invention, a plated wire rod material comprises a substrate composed of aluminum or an aluminum alloy, and a surface treatment coat including one or more metal layers and covering the substrate. Of the one or more metal layers, an undermost metal layer which is a metal layer formed on the substrate includes nickel, a nickel alloy, cobalt or a cobalt alloy. A mixed layer containing a metal component in the substrate, a metal component in the surface treatment coat and an oxygen component is present at an interface between the substrate and the surface treatment coat. Thus, as compared to a conventional plated wire rod material composed of aluminum, in which for example a zinc-containing layer (particularly zincate treatment layer) having a thickness of about 100 nm is present between a substrate and a surface treatment coat, the plated wire rod material according to the present invention can be produced at lower cost and more safely as a result of simplification of the process. Further, the mixed layer containing a metal component in the substrate composed of aluminum or an aluminum alloy, a metal component in the surface treatment coat and an oxygen component functions as a diffusion prevention layer preventing diffusion of the metal component in the substrate and the metal component in the surface treatment coat. This ensures that a plated wire rod material having good corrosion resistance to salt water can be provided.

Further, it has been common technical knowledge that presence of an oxide at an interface between a substrate composed of aluminum or an aluminum alloy and a surface treatment coat deteriorates resistance to thermal peeling of the surface treatment coat with respect to the substrate, but in the present invention, the thickness of the mixed layer containing a metal component in the substrate, a metal component in the surface treatment coat and an oxygen component is controlled at an interface between the substrate and the surface treatment coat, so that excellent resistance to thermal peeling can be exhibited without having to impart a mechanical anchoring effect (anchor effect), and the production time can be considerably reduced.

Further, in the present invention, a plated wire rod material excellent in bending processability can be provided by controlling the thickness of the undermost metal layer.

Further, in the present invention, a metal having good solder wettability is used as a metal on the outermost layer which forms the surface treatment coat, and thus the solder wettability of the plated wire rod material can be improved.

### Brief Description of Drawings

[Fig. 1(A)] A perspective diagram including a transverse cross-section of a plated wire rod material according to a first embodiment of the present invention.
[Fig. 1(B)] A perspective diagram including a transverse cross-section of a plated wire rod material according to a second embodiment of the present invention.
[Fig. 2] A perspective diagram including a transverse cross-section of a plated wire rod material according to a third embodiment of the present invention.
[Fig. 3] A diagram illustrating a method for performing line analysis from a substrate part to a surface treatment coat part using STEM-EDX in observation of a cross-section of a plated wire rod material.

### Description of Embodiments

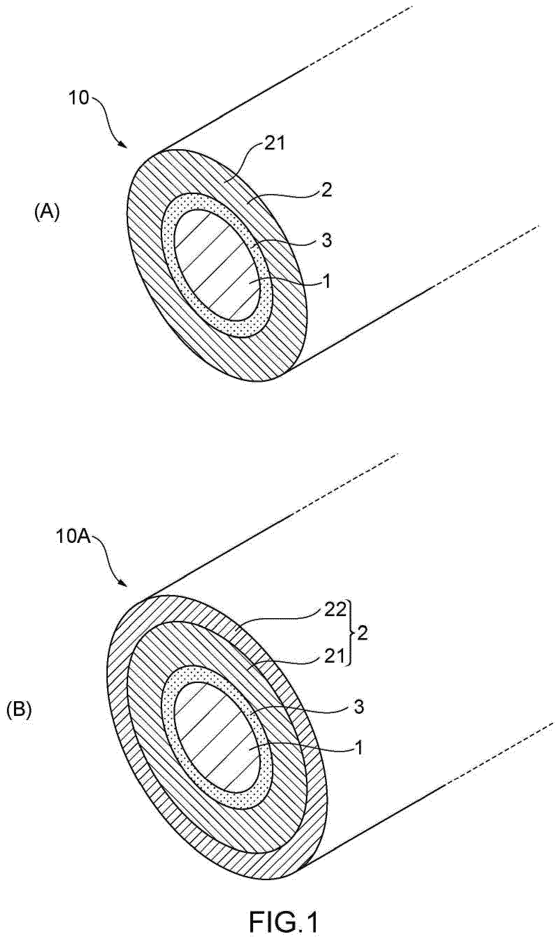

Hereinafter, embodiments of the present invention will be described with reference to the drawings. Fig. 1(A) is a perspective diagram including a transverse cross-section of a plated wire rod material according to a first embodiment. A plated wire rod material 10 shown includes a substrate 1 and a surface treatment coat 2.

The "wire rod material" in the present invention is a collective term of a "wire material" and a "rod material", the "wire material" means a coiled style of packing, and the "rod material" means a non-coiled style of packing. Hereinafter, for making the description easier to understand, a diameter vertical to the longitudinal direction of the wire rod material is collectively referred to as a "wire diameter" irrespective of whether the wire rod material is a wire material or a rod material. Further, in the present invention, the wire diameter of the wire rod material is preferably not less than 0.3 mm and not more than 3.0 mm, more preferably not less than 0.5 mm and not more than 1.0 mm. The shape of the wire rod material is not particularly limited, and examples thereof include a circular shape and a rectangular shape.

### (Substrate)

The substrate 1 is composed of aluminum or an aluminum alloy. Here, the aluminum refers to a material containing aluminum in an amount of not less than 99% by mass. Further, the aluminum alloy contains aluminum in an amount of not less than 50% by mass, and further contains additional elements other than Al, for example Si, Fe, Mn, Cu, Ni and Cr, with the balance of consisting of inevitable impurities. The inevitable impurities are components which are inevitably mixed in the production process with an amount small enough to have no effect on properties. The type of the substrate is not particularly limited, and examples thereof include 1000 series aluminum such as A1070 and A1100, 3000 series alloys such as A3003, 5000 series alloys such as A5005 and A5052, 6000 series alloys such as A6061 and A6063, 7000 series alloys such as A7075 and 8000 series alloys such as A8021 and A8079 as specified in JIS H4000: 2014. Further, aluminum wires or aluminum alloy wires described in International Publication No. WO 2018/012481 and International Publication No. WO 2018/012482 may be used as the substrate 1.

### (Surface treatment coat)

The surface treatment coat 2 includes one or more metal layers, one metal layer 21 in Fig. 1(A), and is formed on the substrate 1. Here, there are cases the surface treatment coat 2 includes one metal layer and where the surface treatment coat 2 includes two or more metal layers, and in the present invention, the (one) metal layer 21 formed on the substrate 1 is referred to as a "undermost metal layer" in both the cases where the surface treatment coat 2 includes one metal layer and where the surface treatment coat 2 includes two or more metal layers. The plated wire rod material 10 shown in Fig. 1(A) includes only one metal layer formed on the substrate 1, and therefore the metal layer 21 of this plated wire rod material is an undermost metal layer.

The undermost metal layer 21 is a metal layer composed of nickel (Ni), a nickel alloy, cobalt (Co) or a cobalt alloy. In light of bending processability, the preferred thickness of the undermost metal layer 21 is preferably 0.05 µm or more and less than 2.0 µm, more preferably not less than 0.1 µm and not more than 1.5 µm, still more preferably not less than 0.2 µm and not more than 1.0 µm.

Further, the surface treatment coat 2 may include the undermost metal layer 21 and one or more metal layers 22 (for example various functional plated layers) formed on the undermost metal layer 21 as shown in Fig. 1(B).

Examples of the one or more metal layers 22 formed on the undermost metal layer 21 include metal layers composed of a metal or alloy appropriately selected from the group consisting of nickel (Ni), a nickel alloy, cobalt (Co), a cobalt alloy, iron (Fe), an iron alloy, copper (Cu), a copper alloy, tin (Sn), a tin alloy, silver (Ag), a silver alloy, gold (Au), a gold alloy, platinum (Pt), a platinum alloy, rhodium (Rh), a rhodium alloy, ruthenium (Ru), a ruthenium alloy, iridium (Ir), an iridium alloy, palladium (Pd) and a palladium alloy according to a desired property to be imparted. For example, when one or more metal layers 22 are formed on the undermost metal layer 21, the undermost metal layer 21 composed of nickel, a nickel alloy, cobalt or a cobalt alloy is formed on the substrate 1 subjected to a surface activation treatment step as described later. Thereafter, as covering layers for imparting to the plated wire rod material 10 a function required for each of various components, one or more metal layers (each having a composition different from that of the undermost metal layer 21) composed of a metal or alloy selected from nickel, a nickel alloy, cobalt, a cobalt alloy, iron, an iron alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy are formed on the undermost metal layer 21, and thus the plated wire rod material (plated material) 10 excellent in long-term reliability can be obtained. It is preferable that in particular, the surface treatment coat 2 have two or more metal layers 21 and 22 including at least the undermost metal layer 21 for improvement of the resistance to thermal peeling from the substrate 1, and so on, and the metal layer 22 as a covering layer for imparting a function. Examples of the surface treatment coat 2 including the undermost metal layer 21 and the metal layer 22 include the surface treatment coat 2 obtained by forming a nickel layer on the substrate 1 as the undermost metal layer 21, and then further forming on the undermost metal layer 21 the gold-plated layer 22 having good solder wettability as the metal layer 22 for imparting a function. By forming the metal layer 22 on the undermost metal layer 21, a plated wire rod material (plated material) 10A excellent in solder wettability can be provided. Further, the method for forming the metal layers 21 and 22 is not particularly limited, but it is preferable to form the metal layers by a wet plating method.

### (Characteristic configuration of invention)

The configuration of the present invention is characterized in that the interface structure between the substrate 1 composed of aluminum or an aluminum alloy and the surface treatment coat 2 is controlled to be an appropriate structure, and more specifically, the mixed layer 3 containing a metal component in the substrate 1, a metal component in the surface treatment coat 2 and an oxygen component is present at an interface between the substrate 1 and the surface treatment coat 2.

Aluminum for use in the present invention is a less-noble metal having a high ionization tendency, and is generally subjected to substitution treatment with zinc, that is, zincate treatment. In conventional zincate treatment, the thickness of a zinc-containing layer present between aluminum and a surface treatment coat (plated coat) is, for example, about 100 nm. When zinc is present in the zinc-containing layer, the plated coat may be peeled off by a temperature change, heating or the like. Further, when zinc is diffused in the surface treatment coat, and diffused and exposed to the surface layer of the surface treatment coat, contact resistance is increased. Further, various problems such as deterioration of solder wettability and deterioration of corrosion resistance to salt water occur, and as a result, the properties of the plated wire rod material may be degraded through the use of the plated wire rod material, leading to impairment of long-term reliability.

Thus, it is desirable that there be no zinc-containing layer between the substrate 1 and the surface treatment coat 2. In conventional coat formation techniques, however, in the absence of a zinc-containing layer (particularly zincate treatment layer), it is difficult to form a surface treatment coat (plated coat) having good resistance to thermal peeling with respect to the substrate 1, particularly the substrate 1 which is a less-noble metal having a high ionization tendency.

Thus, prior to formation of the surface treatment coat (plated coat) 2, the mixed layer 3 containing a metal component in the substrate 1, a metal component in the surface treatment coat 2 and an oxygen component is formed at an interface between the substrate 1 and the surface treatment coat 2 by subjecting a surface of the substrate 1 to a surface activation treatment step. This ensures that the oxygen component in the mixed layer 3 is bonded to metal atoms (for example aluminum atoms) that form the substrate 1, and the oxygen component in the mixed layer 3 is bonded to metal atoms (for example nickel atoms) that form the surface treatment coat 2. As a result, the surface treatment coat 2 can be conveniently formed on the substrate 1 without having to impart a particularly high mechanical anchoring effect, that is, an anchor effect. Further, since the mixed layer 3 functions as a diffusion prevention layer which prevents diffusion of a metal component in the substrate 1 and a metal component in the surface treatment coat 2, the plated wire rod material 10 of the present invention is improved in terms of corrosion resistance to salt water, etc., and is excellent in long-term reliability. Thus, it is possible to provide a plated wire rod material exhibiting excellent corrosion resistance to salt water in, for example, a corrosion test of conducting a salt water spray test for 8 hours using a 5 mass% saline solution.

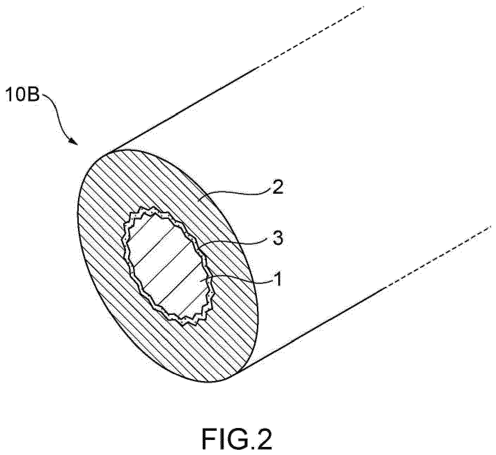

The mixed layer 3 contains a metal component in the substrate 1, a metal component in the surface treatment coat 2 and an oxygen component, and is formed at an interface between the substrate 1 and the surface treatment coat 2. In Figs. 1(A) and 1(B), the substrate 1 fully covered with the mixed layer 3, but in the present invention, the phrase "a mixed layer is present at an interface" includes not only a case where the substrate 1 is fully covered with the mixed layer 3 but also a case where only a part of the substrate 1 is covered with the mixed layer 3, or the mixed layer 3 is scattered on the substrate 1. Further, as shown in Figs. 1(A) and 1(B), the interface between the substrate 1 and the mixed layer 3 and the interface between the surface treatment coat 2 and the mixed layer 3 may be smooth surfaces free from irregularities, or as in a plated wire rod material 10B shown in Fig. 2, the interface between the substrate 1 and the mixed layer 3 and the interface between the surface treatment coat 2 and the mixed layer 3 may be formed in an irregular shape. In practice, the interface between the substrate 1 and the mixed layer 3 and the interface between the surface treatment coat 2 and the mixed layer 3 are not formed with a smooth curved surface as shown in Figs. 1(A) and 1(B), but formed as a curved surface having very small irregularities.

The average thickness of the mixed layer 3 is preferably in a range of not less than 1.00 nm and not more than 40 nm as measured at a vertical cross-section of the plated wire rod material 10. When the average thickness of the mixed layer 3 is in this range, a plated wire rod material exhibiting excellent resistance to thermal peeling can be obtained. When the average thickness is more than 40 nm, the bonding strength of the metal component in the substrate 1, the metal component in the surface treatment coat 2 and the oxygen component in the mixed layer 3 is lower than each of the bonding strength between the substrate 1 and the oxygen component in the mixed layer 3 and the bonding strength between the surface treatment coat 2 and the oxygen component in the mixed layer 3. Thus, the mixed layer 3 tends to be broken, leading to deterioration of the resistance to thermal peeling of the surface treatment coat 2 with respect to the substrate 1. On the other hand, when the average thickness of the mixed layer 3 is less than 1.00 nm, the resistance to thermal peeling of the surface treatment coat 2 with respect to the substrate 1 tends to be deteriorated because the bonding strength between the substrate 1 and the oxygen component in the mixed layer 3 and the bonding strength between the surface treatment coat 2 and the oxygen component in the mixed layer 3 are not sufficiently exhibited. The average thickness of the mixed layer 3 is preferably in a range of not less than 5.00 nm and not more than 30 nm, and by setting the average thickness of the mixed layer 3 within this range, further excellent resistance to thermal peeling can be obtained.

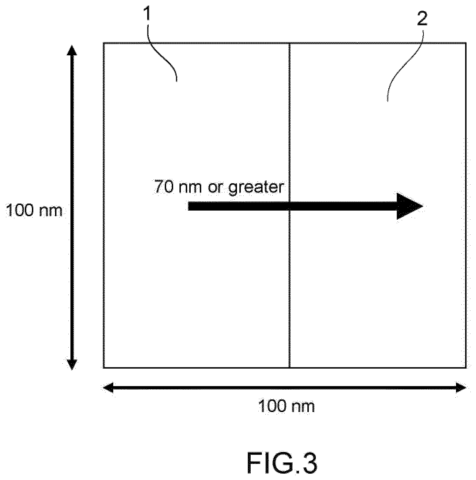

The mixed layer 3 can be detected by using, for example, a scanning transmission electron microscope/energy dispersion type X-ray spectrometric analyzer (STEM-EDX). Specifically, the mixed layer 3 can be defined as a region where the detected intensity of the main component of the surface treatment coat 2 is not less than 0.5 times and not more than 2.0 times the detected intensity of the main component of the substrate 1 and the detected intensity of oxygen is not less than 10% of the sum of the detected intensities of the main component of the substrate 1 and the main component of the surface treatment coat 2 as measured using STEM-EDX. For example, in observation of a cross-section of the plated wire rod material, five points arranged at intervals of 50 µm over a straight line are defined randomly on the substrate, and focused ion-beam processing (FIB processing) is performed at the five points. Thereafter, using STEM-EDX, surface analysis is performed at a resolution of not less than 1 nm/pixel over a range of 100 nm × 100 nm in which the interface between the substrate 1 and the surface treatment coat 2 is situated in the vicinity of the center of the range (see Fig. 3). Further, at the central part of the thus-obtained composition mapping image, line analysis is performed over a range of not less than 70 nm from the substrate 1 side to the surface treatment coat 2 side. In the thus-obtained detected intensity profiles of each of the components of the plated wire rod material, the vertical length in the plated coat lamination direction of a range over which the detected intensity of the main component of the surface treatment coat 2 is not less than 0.5 times and not more than 2.0 times the detected intensity of the main component of the substrate 1 and the detected intensity of oxygen is not less than 10% of the sum of the detected intensities of the main component of the substrate 1 and the main component of the surface treatment coat 2 is determined, and the average of the vertical lengths is determined. This vertical length, that is, the average thickness of the mixed layer 3, is preferably in a range of not less than 1.00 nm and not more than 40 nm. The average thickness of the mixed layer 3 can be determined by forming any transverse cross-section of the plated wire rod material by, for example, a cross-section formation method such as cross-sectioning after embedment of resin, FIB processing, ion milling or cross-section polishing, measuring the thickness at each of a plurality of positions in any observation region, and calculating the average value thereof.

### (Method for producing plated wire rod material)

Hereinafter, some embodiments of the method for producing a plated wire rod material according to the present invention will be described.

For example, for producing a plated wire rod material having a cross-sectional layer structure as shown in Fig. 1(A), aluminum (for example 1000 series aluminum such as A1100 as specified in JIS H4000: 2014) and an aluminum alloy (for example a 6000 (Al-Mg-Si) series alloy such as A6061 as specified in JIS H4000: 2014) may be subjected to a electrolytic degreasing step, a surface activation treatment step and a surface treatment coat forming step in the order presented. Further, it is preferable to carry out washing steps between the above-described steps as necessary. The aluminum alloy material is not particularly limited, and for example, an extruded material, a cast ingot material, a hot-rolled material, a cold-rolled material or the like can be appropriately selected according to use purpose.

### (Electrolytic degreasing step)

The electrolytic degreasing step is a step of subjecting the substrate 1 to electrolytic degreasing. For example, the substrate 1 is immersed as a cathode in an alkali degreasing bath containing 20 to 200 g/L sodium hydroxide (NaOH), and electrolytically degreased under the condition of a current density of 2.5 to 5.0 A/dm², a bath temperature of 20 to 70°C and a treatment time of 10 to 100 seconds.

### (Surface activation treatment step)

The surface activation treatment step is carried out after the electrolytic degreasing step. The surface activation treatment step is a step of performing novel activation treatment different from conventional activation treatment, and is the most important of the steps involved in production of the plated wire rod material of the present invention.

In a conventional coat formation technique, in the absence of a zinc-containing layer (particularly zincate treatment layer), it is difficult to form a surface treatment coat (plated coat) having good resistance to thermal peeling with respect to the substrate 1 composed of aluminum, which is a less-noble metal having a particularly high ionization tendency, or an aluminum alloy. It is considered that in the present invention, by carrying out the surface activation treatment step, a crystal nucleus or a thin layer of metal atoms identical to metal atoms (for example nickel atoms) that form the undermost metal layer 21 to be subsequently formed on the substrate 1 can be formed on the substrate 1 before formation of the undermost metal layer 21. Subsequently, the mixed layer 3 is formed at an interface between the crystal nucleus or the thin layer and the substrate 1. This ensures that the metal component in the substrate 1 and the metal component in the surface treatment coat 2 can be each bonded to the oxygen component in the mixed layer 3. As a result, the surface treatment coat 2 can be conveniently formed on the substrate 1 without having to form a zinc-containing layer containing zinc as a main component by zincate treatment or the like, and further, a plated wire rod material improved in terms of corrosion resistance to salt water can be prepared.

The surface activation treatment is performed preferably in the following manner: a surface of the substrate 1 subjected to electrolytic degreasing treatment is treated at a treatment temperature of 10 to 60°C, preferably 20°C to 60°C and a current density of 0.05 to 20 A/dm², preferably 0.1 to 20 A/dm² for a treatment time of 0.5 to 150 seconds, preferably 1 to 100 seconds using an activation treatment liquid containing: (i) 10 to 500 mL/L of one or more acid solutions selected from solutions of sulfuric acid, nitric acid, hydrochloric acid, hydrofluoric acid and phosphoric acid; and (ii) a nickel compound selected from the group consisting of nickel sulfate, nickel nitrate, nickel chloride and nickel sulfamate (0.1 to 500 g/L in terms of a nickel metal content), or a cobalt compound selected from the group consisting of cobalt sulfate, cobalt nitrate, cobalt chloride and cobalt sulfamate (0.1 to 500 g/L in terms of a cobalt metal content). Further, it is preferable that oxygen be incorporated in the activation treatment liquid at a dissolved oxygen concentration of 3 to 100 ppm because the mixed layer 3 can be efficiently formed. The thickness of a covering layer formed of a main component metal (nickel, cobalt or the like) precipitated on the surface of the substrate 1 in the surface activation treatment is not more than 0.5 µm.

### (Surface treatment coat forming step)

The surface treatment coat forming step is carried out after the surface activation treatment step. In the surface treatment coat forming step, the surface treatment coat 2 including only the undermost metal layer 21 may be formed, but according to a property (function) to be imparted to the plated wire rod material 10, one or more (other) metal layers 22 may be further provided on the undermost metal layer 21 to form the surface treatment coat 2 including at least two metal layers 21 and 22 including the undermost metal layer 21.

### [Undermost metal layer forming step]

The undermost metal layer 21 is a metal layer composed of nickel (Ni), a nickel alloy, cobalt (Co) or a cobalt alloy. The undermost metal layer 21 can be formed by a wet plating method such as electrolytic plating or electroless plating using a plating liquid containing nickel (Ni) or cobalt (Co). Examples of plating bath compositions and plating conditions in formation of the undermost metal layer 21 by nickel (Ni) plating or cobalt (Co) plating are shown in Tables 1 and 2.

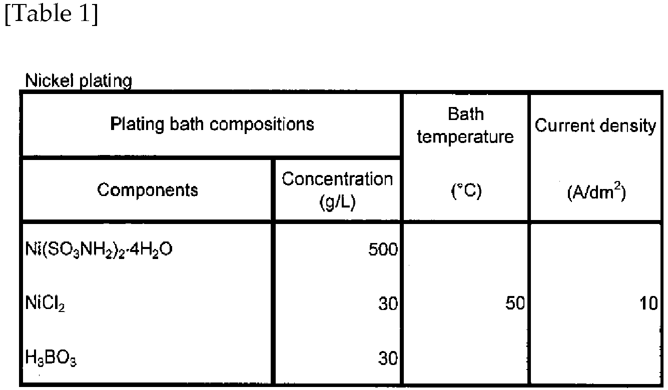

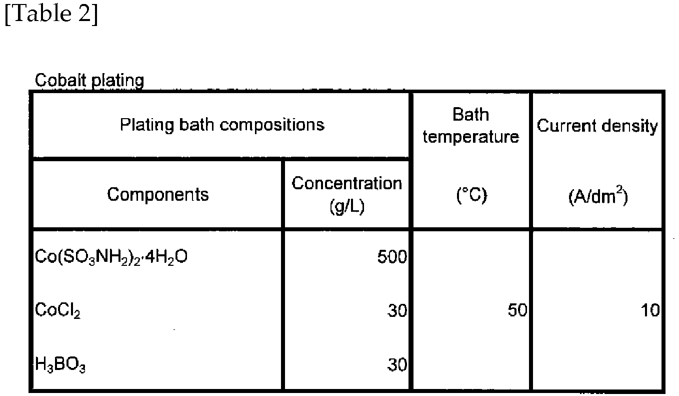

### [Step of forming metal layers other than undermost metal layer]

When of metal layers 21 and 22 that form the surface treatment coat 2, (other) metal layers 22 other than the undermost metal layer 21 are formed, the metal layers 22 can be formed by a wet plating method such as electrolytic plating or electroless plating according to a property (function) to be imparted to the plated wire rod material. Examples of plating bath compositions and plating conditions in formation of metal layers by nickel (Ni) plating, cobalt (Co) plating, iron (Fe) plating, copper (Cu) plating, tin (Sn) plating, silver (Ag) plating, silver (Ag)-tin (Sn) plating, silver (Ag)-palladium (Pd) plating, gold (Au) plating, palladium (Pd) plating and rhodium (Rh) plating are shown in Tables 1 to 11, respectively.

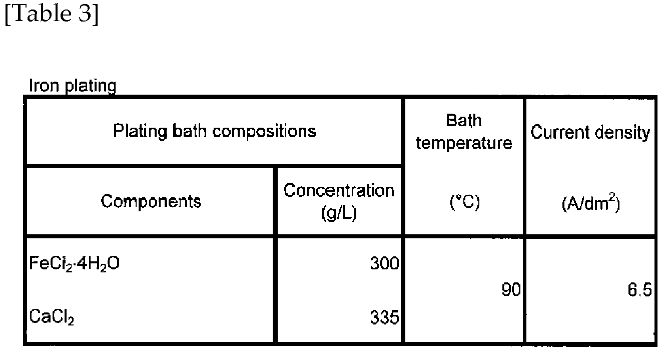

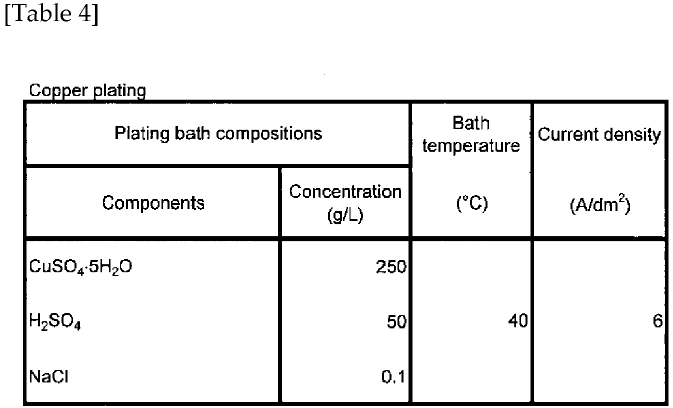

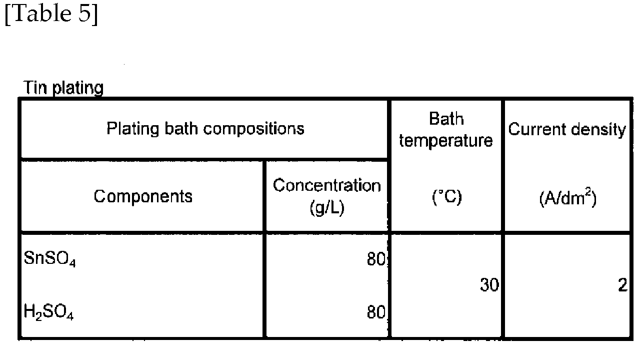

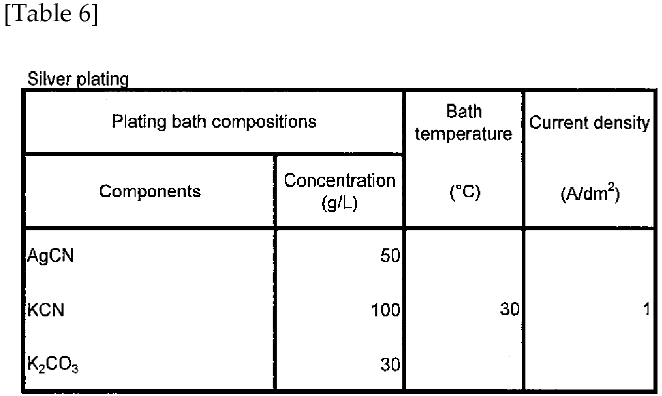

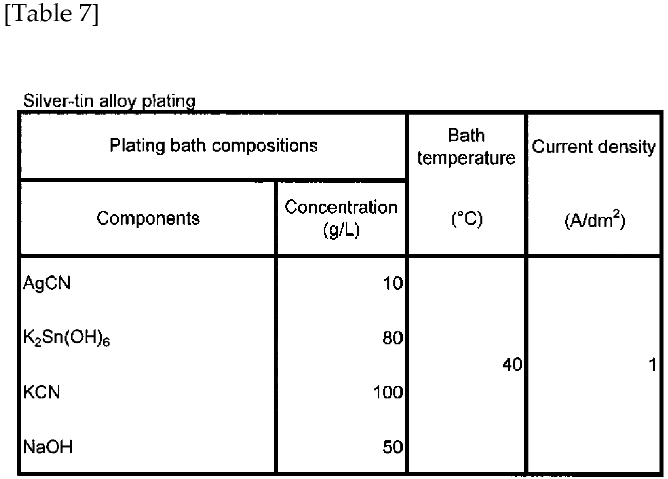

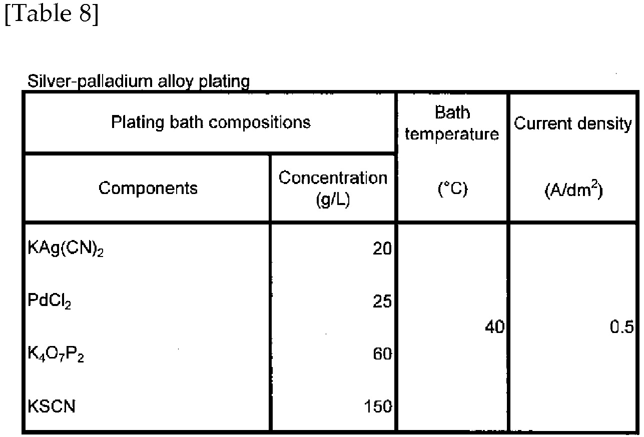

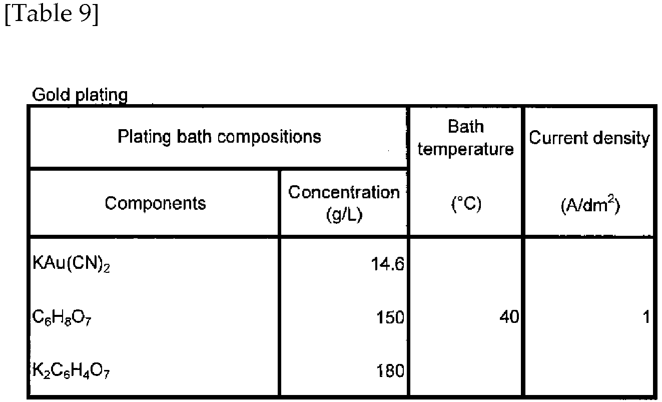

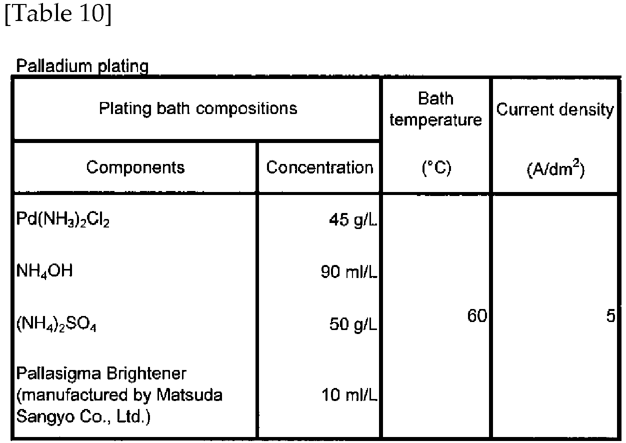

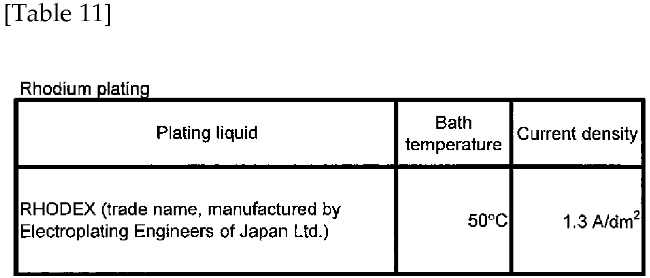

The surface treatment coat 2 can be formed while according to a purpose, various layer configurations are tailored by properly combining the above-described undermost metal layer 21 with one or more metal layers 22 formed on the undermost metal layer 21.

The plated wire rod material of the present invention can be used for a variety of purposes. Specifically, the plated wire rod material can be suitably used for electrically conductive members such as electric wires and cables, battery members such as meshes and grids for current collectors, spring members (for electrical contacts) such as connectors and terminals, bonding wires for semiconductors, coils such as voice coils, winding wires to be used for power generators and motors, and the like.

More specific examples of the electrically conductive member include electric wires for power such as cabtire cables, overhead transmission lines, OPGWs, underground electric wires and undersea cables; electric wires for communication such as telephone cables and coaxial cables; robot cables; cables for wired drones; charging cables for EV/HEV; twisted cables for offshore wind power generation; elevator cables; umbilical cables; train overhead wires; electric wires for vehicles such as jumper wires; electric wires for equipment such as trolley wires; transportation electric wires such as automobile wire harnesses, watercraft electric wires and aircraft electric wires; bus bars; lead frames; flexible flat cables; lightning conductors; antennas; connectors; terminals; and braided cables.

More specific application examples of the spring member include spring electrodes, terminals, connectors and semiconductor probe springs.

The matters described above are merely illustrative of some embodiments of this invention, and various changes can be made within claims. Examples

Hereinafter, the present invention will be described in further detail on the basis of examples, but the present invention is not limited to these examples.

### (Inventive Examples 1 to 27 and 30 and 31)

In each of Inventive Examples 1 to 27, an aluminum wire material (outer diameter φ: 0.9 mm) shown in Table 12 was subjected to electrolytic degreasing treatment under the above-described conditions, and then subjected to surface activation treatment. An alloy 1 shown in Inventive Example 27 is the wire material described in International Publication No. WO 2018/012481. In each of Inventive Examples 1 to 16, 18 to 27 and 30, the surface activation treatment was performed under a condition in which the aluminum wire material was treated at a treatment temperature of 20 to 60°C and a current density of 0.1 to 20 A/dm² for a treatment time of 1 to 100 seconds using an activation treatment liquid containing 10 to 500 mL/L of one or more acid solutions selected from solutions of sulfuric acid, nitric acid, hydrochloric acid, hydrofluoric acid and phosphoric acid, and a nickel compound selected from the group consisting of nickel sulfate, nickel nitrate, nickel chloride and nickel sulfamate (0.1 to 500 g/L in terms of a nickel metal content). Further, in each of Inventive Examples 17 and 31, the surface activation treatment was performed under a condition in which the aluminum wire material was treated at a treatment temperature of 30°C and a current density of 2 A/dm² for a treatment time of 20 to 60 seconds using an activation treatment liquid containing 300 mL/L of one or more acid solutions selected from solutions of sulfuric acid, nitric acid, hydrochloric acid, hydrofluoric acid and phosphoric acid, and a cobalt compound selected from the group consisting of cobalt sulfate, cobalt nitrate, cobalt chloride and cobalt sulfamate (50 g/L in terms of a cobalt metal content). Thereafter, in each of Inventive Examples 1 to 27, a surface treatment coat 2 including an undermost metal layer 21 and a covering metal layer 22 formed on the undermost metal layer 21 was formed by the above-described surface treatment coat formation treatment to prepare a plated wire rod material 10 of the present invention. In each of Inventive Examples 30 and 31, a surface treatment coat 2 including an undermost metal layer 21 was formed by the above-described surface treatment coat formation treatment to prepare a plated wire rod material 10 of the present invention. The types of substrates 1, the types of metal compounds incorporated in activation treatment liquids used for surface activation treatment, the average thicknesses (nm) of mixed layers 3, and the types and the average thicknesses (µm) of metal compounds forming undermost metal layers 21 and covering metal layers 22 are shown in Table 12. Further, the metal layers 21 and 22 forming the surface treatment coat 2 were formed under the plating conditions shown in Tables 1 to 11.

### (Inventive Example 28)

In Inventive Example 28, electrolytic degreasing treatment was performed, and surface activation treatment was then performed as in Inventive Example 1. The surface activation treatment was performed under a condition in which a wire material was treated at a treatment temperature of 10°C and a current density of 0.05 A/dm² for a treatment time of 0.5 seconds using an activation treatment liquid containing 200 mL/L of one or more acid solutions selected from solutions of sulfuric acid, nitric acid, hydrochloric acid, hydrofluoric acid and phosphoric acid, and a nickel compound selected from the group consisting of nickel sulfate, nickel nitrate, nickel chloride and nickel sulfamate (10 g/L in terms of a nickel metal content). Thereafter, a surface treatment coat including two metal layers in which a nickel-plated layer and a gold-plated layer were laminated with a thickness shown in Table 12 was formed by the above-described surface treatment coat formation treatment to prepare a plated wire rod material. In the plated wire rod material prepared in Inventive Example 28, the average thickness of a mixed layer 3 was 0.98 nm because the treatment temperature was low, the current density was small and the treatment time was short.

### (Inventive Example 29)

In Inventive Example 29, electrolytic degreasing treatment was performed, and surface activation treatment was then performed as in Inventive Example 1. The surface activation treatment was performed under a condition in which a wire material was treated at a treatment temperature of 50°C and a current density of 5 A/dm² for a treatment time of 150 seconds using an activation treatment liquid containing 200 mL/L of one or more acid solutions selected from solutions of sulfuric acid, nitric acid, hydrochloric acid, hydrofluoric acid and phosphoric acid, and a nickel compound selected from the group consisting of nickel sulfate, nickel nitrate, nickel chloride and nickel sulfamate (10 g/L in terms of a nickel metal content). Thereafter, a surface treatment coat including two metal layers in which a nickel-plated layer and a gold-plated layer were laminated with a thickness shown in Table 12 was formed by the above-described surface treatment coat formation treatment to prepare a plated wire rod material. In the plated wire rod material prepared in Inventive Example 29, the average thickness of a mixed layer 3 was 48 nm because the treatment time was long.

### (Conventional Example 1)

In Conventional Example 1, an aluminum wire (outer diameter φ: 0.9 mm) shown in Table 12 was subjected to electrolytic degreasing treatment under the above-described conditions, and then subjected to conventional zinc substitution treatment (zincate treatment) to form a zinc-containing layer having a thickness of 110 nm. Thereafter, without performing surface activation treatment, a surface treatment coat including two metal layers in which a nickel-plated layer and a gold-plated layer were laminated with a thickness shown in Table 12 was formed by the above-described surface treatment coat formation treatment to prepare a plated wire rod material.

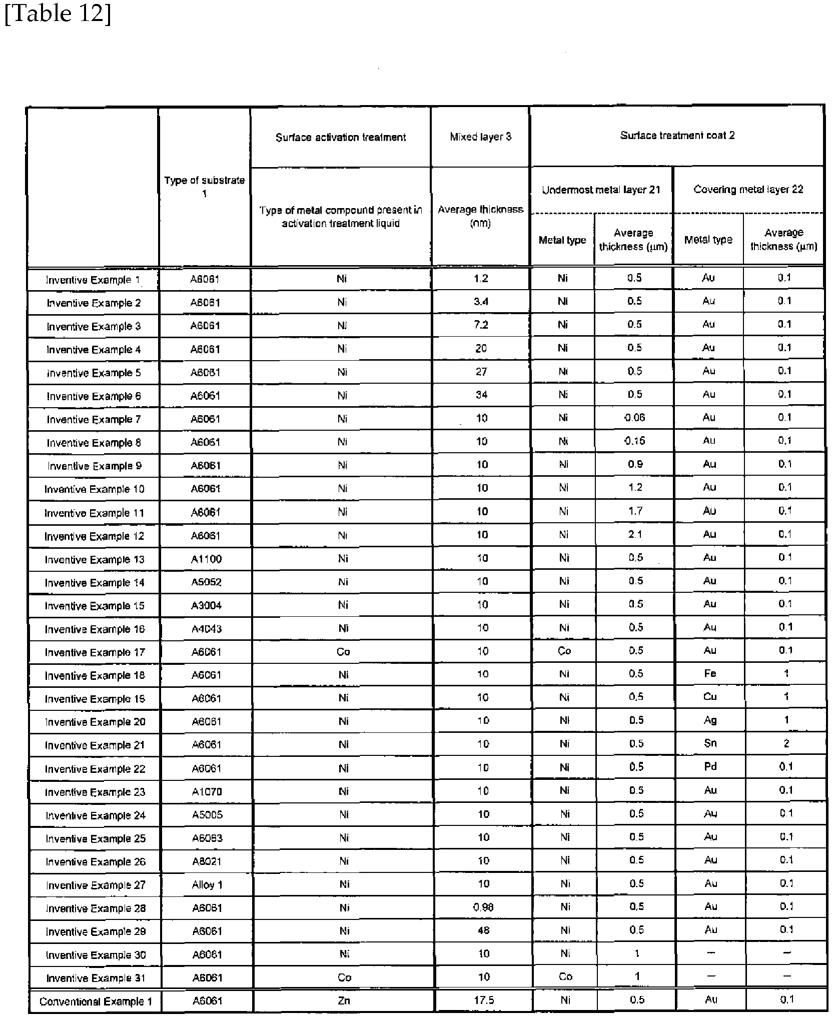

### (Evaluation method)

### <Resistance to thermal peeling of surface treatment coat with respect to substrate>

A test material (plated wire rod material) prepared by the above-described method was heated at 200°C for 168 hours, and a peeling test was conducted to evaluate the resistance to thermal peeling of the surface treatment coat with respect to the substrate. The peeling test was conducted in accordance with the procedure described in "19. Coiling Test Method" in "Plating Adhesion Test Method" specified in JIS H 8504: 1999. The evaluation results are shown in Table 13. The resistance to thermal peeling shown in Table 13 was evaluated in accordance with the following criteria:
"⊙ (Very Good)": no plating peeling
"○ (Good)": adequately bonded over 95% or more and less than 100% of the test area
"Δ (Fair)": adequately bonded over 85% or more and less than 95% of the test area
"× (Poor)": the bonded region occupies less than 85% of the test area. In this test, test materials rated "⊙ (Very Good)", "○ (Good)" and "Δ (Fair)" were evaluated as having acceptable resistance to thermal peeling.

### <Solder wettability>

For each test material (plated wire rod material) prepared by the above-described method, the solder wetness time was measured using a solder checker (SAT-5100 (trade name, manufactured by RHESCA Co., Ltd.)), and the solder wettability was evaluated from the measured value of the solder wetness time. The evaluation results are shown in Table 13. Detailed measurement conditions for the solder wettability shown in Table 13 will be described below. The solder wettability was evaluated in accordance with the following criteria:
"⊙ (Acceptable)": the solder wetness time is less than 3 seconds
"× (Unacceptable)": not bonded even after immersion for 3 seconds or more.

Type of solder: Sn-3Ag-0.5Cu
Temperature: 250°C
Test piece size: φ 0.9 mm × 30 mm
Flux: isopropyl alcohol-25% rosin
Immersion rate: 25 mm/sec
Immersion time: 10 seconds
Immersion depth: 10 mm

### <Corrosion resistance to salt water>

For each test material (plated wire rod material) prepared by the above-described method, a salt water spray test using a 5 mass% NaCl aqueous solution was conducted at 35±5°C to evaluate the corrosion resistance to salt water. For each test material, three samples were prepared, and each subjected to the salt water spray test for 8 hours. Thereafter, whether or not a corrosive product was generated was visually determined. The evaluation results are shown in Table 13. The corrosion resistance to salt water in Table 13 was evaluated in accordance with the following criteria:
"⊙ (Very Good)": all three samples are the same as before the test
"○ (Good)": two samples are the same as before the test
"Δ (Fair)": one sample is the same as before the test
"× (Poor)": none of the samples is the same as before the test.
In this test, test materials rated "⊙ (Very Good)", "○ (Good)" and "Δ (Fair)" were evaluated as having acceptable corrosion resistance to salt water.
Test piece size: φ 0.9 mm × 30 mm

### <Bending processability>

For each test material (plated wire rod material) prepared by the above-described method, the bending processability was evaluated in accordance with the procedure described in "6.1 Pressing Bend Method" in "Metal Material Bending Test Method" specified in JIS H 2248: 2006. The bending processability in Table 13 was evaluated in accordance with the following criteria:
"⊙ (Very Good)": neither cracked nor peeled
"O (Good)": slightly cracked but not peeled
"Δ (Fair)": slightly peeled
"× (Poor)": significantly peeled.
In this test, test materials rated "⊙ (Very Good)", "○ (Good)" and "Δ (Fair)" were evaluated as having acceptable bending processability.

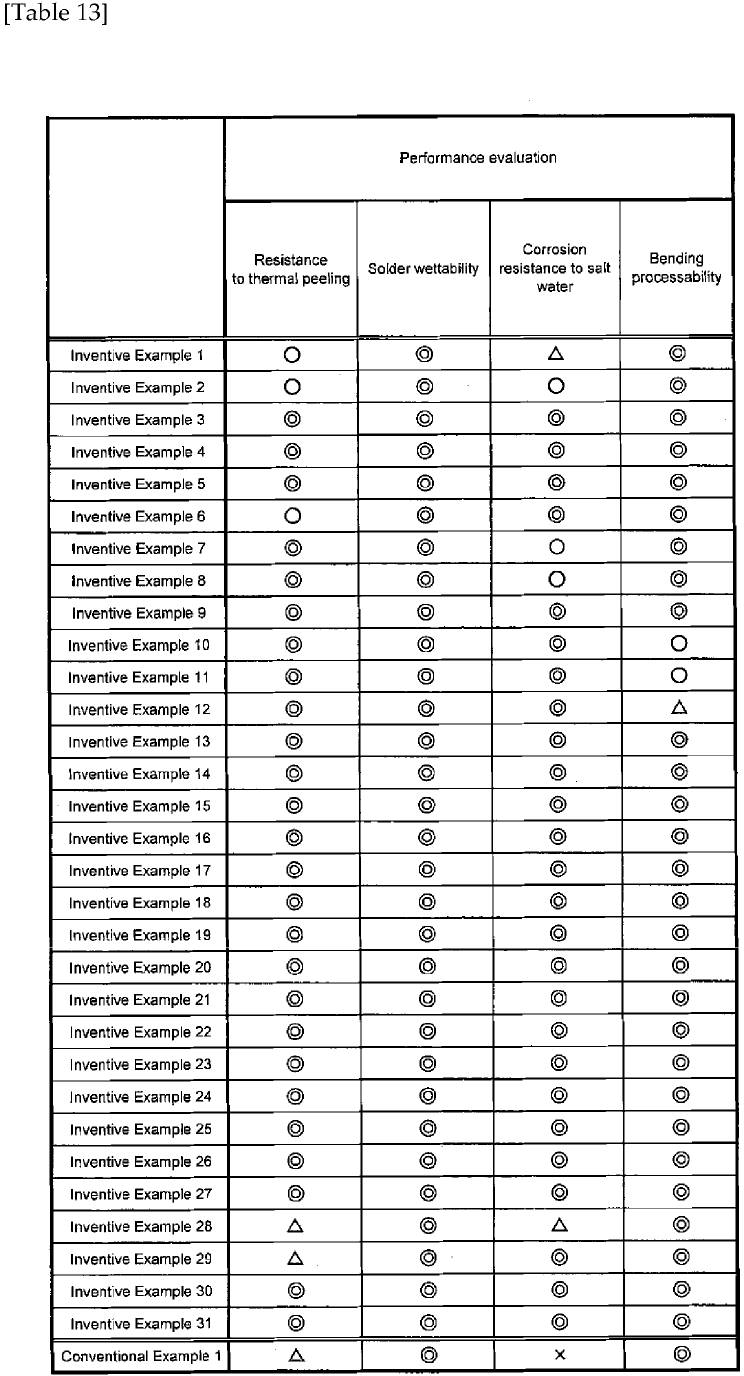

As shown in Table 13, the plated wire rod materials of Inventive Examples 1 to 31 each had acceptable solder wettability, corrosion resistance to salt water and bending processability. Further, the plated wire rod materials of Inventive Examples 1 to 27, 30 and 31 in which the average thickness of the mixed layer 3 was in a range of not less than 1.00 nm and not more than 40 nm were excellent in resistance to thermal peeling, and in particular, the plated wire rod materials of Inventive Examples 3 to 5, 7 to 27, 30 and 31 exhibited exceptional resistance to thermal peeling. Further, the plated wire rod materials of Inventive Examples 1 to 11 and 13 to 31 in which the thickness of the undermost metal layer 21 was not less than 0.05 µm and less than 2.0 µm were excellent in bending processability, and in particular, the plated wire rod materials of Inventive Examples 1 to 9 and 13 to 31 exhibited exceptional bending processability. On the other hand, the plated wire rod material of Conventional Example 1 was poor in corrosion resistance to salt water because a zinc-containing layer was formed on an aluminum-based substrate by subjecting the aluminum-based substrate to zincate treatment.

### List of Reference Signs

- 10, 10A, 10B: plated wire rod material
- 1: substrate
- 2: surface treatment coat
- 3: mixed layer
- 21: undermost metal layer
- 22: metal layer (covering metal layer)

## Claims

1. A plated wire rod material comprising: a substrate composed of aluminum or an aluminum alloy; and a surface treatment coat including one or more metal layers and covering the substrate, **characterized in that**
of the one or more metal layers, an undermost metal layer which is a metal layer formed on the substrate includes nickel, a nickel alloy, cobalt or a cobalt alloy, and
a mixed layer containing a metal component in the substrate, a metal component in the surface treatment coat and an oxygen component is present at an interface between the substrate and the surface treatment coat.

2. The plated wire rod material according to claim 1, wherein an average thickness of the mixed layer is in a range of not less than 1.00 nm and not more than 40 nm as measured at a vertical cross-section of the plated wire rod material.

3. The plated wire rod material according to claim 1 or 2, wherein in a detected intensity profile of each of the components of the plated wire rod material which are obtained by performing line analysis from the substrate side to the surface treatment coat side using SETM-EDX in observation of a cross-section of the plated wire rod material,
a vertical length in the plated coat lamination direction of a range over which the detected intensity of a main component of the surface treatment coat 2 is not less than 0.5 times and not more than 2.0 times the detected intensity of the main component of the substrate and the detected intensity of oxygen is not less than 10% of a sum of the detected intensities of the main component of the substrate and the main component of the surface treatment coat is in a range of not less than 1.00 nm and not more than 40 nm.

4. The plated wire rod material according to any one of claims 1 to 3, wherein the thickness of the undermost metal layer is 0.05 µm or more and less than 2.0 µm.

5. The plated wire rod material according to any one of claims 1 to 4, wherein the surface treatment coat has the undermost metal layer, and one or more metal layers formed on the undermost metal layer, and the one or more metal layers are formed of any one selected from the group consisting of nickel, a nickel alloy, cobalt, a cobalt alloy, iron, an iron alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy.

6. The plated wire rod material according to claim 5, wherein the one or more metal layers include two or more metal layers.

7. A method for producing the plated wire rod material according to any one of claims 1 to 6, comprising a surface activation treatment step of treating a surface of the substrate at a dissolved oxygen concentration in an activation treatment liquid of not less than 3 ppm and not more than 100 ppm, a treatment temperature of 10 to 60°C and a current density of 0.05 to 20 A/dm² for a treatment time of 0.5 to 150 seconds using an activation treatment liquid containing:
(i) 10 to 500 mL/L in total of one or more acid solutions selected from solutions of sulfuric acid, nitric acid, hydrochloric acid, hydrofluoric acid, phosphoric acid, hydrobromic acid, hydroiodic acid, acetic acid and oxalic acid; and
(ii) a nickel compound selected from the group consisting of nickel sulfate, nickel nitrate, nickel chloride, nickel bromide, nickel iodide and nickel sulfamate (0.1 to 500 g/L in terms of a nickel metal content), or a cobalt compound selected from the group consisting of cobalt sulfate, cobalt nitrate, cobalt chloride, cobalt bromide, cobalt iodide and cobalt sulfamate (0.1 to 500 g/L in terms of a cobalt metal content).

8. A cable formed using the plated wire rod material according to any one of claims 1 to 6.

9. An electric wire formed using the plated wire rod material according to any one of claims 1 to 6.

10. A coil formed using the plated wire rod material according to any one of claims 1 to 6.

11. A spring member formed using the plated wire rod material according to any one of claims 1 to 6.
